## Europäisches Patentamt
## European Patent Office
## Office européen des brevets

(19)

(11) Publication number: **0 018 053**
**B1**

(12) **EUROPEAN PATENT SPECIFICATION**

(45) Date of publication of patent specification: **07.12.83**

(51) Int. Cl.³: **G 01 V 1/02, G 01 V 1/38**

(21) Application number: **80200356.6**

(22) Date of filing: **17.04.80**

(54) Means for marine seismic exploration and method of operating such means.

(30) Priority: **24.04.79 GB 7914188**

(43) Date of publication of application:
**29.10.80 Bulletin 80/22**

(45) Publication of the grant of the patent:
**07.12.83 Bulletin 83/49**

(84) Designated Contracting States:
**FR IT NL**

(56) References cited:
**FR - A - 1 543 674**
**US - A - 3 331 050**
**US - A - 3 414 874**
**US - A - 3 581 273**
**US - A - 3 921 124**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Lamb, Andrew Thomas**
**NBR 40-10401-19 Street S.W.**
**Calgary, Alberta T2W 3E7 (CA)**
Inventor: **Lofthouse, John Herbert**
**Piasau 114**
**Lutong, Sarawak (MY)**

(74) Representative: **Puister, Antonius Tonnis, Mr. et al,**
**P.O. Box 302**
**NL-2501 CH The Hague (NL)**

Courier Press, Leamington Spa, England.

## Means for marine seismic exploration and method of operating such means

The invention relates to a means for marine seismic exploration comprising a towing vessel, a plurality of hydrophones attached to the towing vessel by means of a flexible cable and elongate floats, each float carrying an array of seismic sources, at least three floats being attached to the towing vessel by means of a flexible towing cable extending between the vessel and a connecting means on the float. Such a means is known from specification US—A—3,581,273. This US specification describes in a first embodiment the use of only three paravanes being towed by the vessel, each paravane being provided with echo-responsive means and seismic sources. The sources are periodically activated to generate acoustic wave fronts and the acoustic waves are detected by the hydrophones after the refraction or reflection of the waves by the underground layers of the marine area. Further this US specification discloses in another embodiment the use of only one cable supporting impulse generating and echo-sensing means, said cable being provided with one or more paravanes.

The above US specification proposes the use of hydrophones which are stretched out in a straight line or "spread". Each "spread" is supported by a paravane. However, it is difficult to maintain several "spreads" in a straight line during towing of the "spreads". Further the equipment of the said US specification is restricted to either the use of three paravanes or the use of only one cable provided with one or more paravanes, which restricts the area being covered by the seismic equipment.

The above-referred technique is generally used at present, but undesired reflections from unknown sources are often found to interfere with the receipt of the seismic waves that are returned to the body of water overlying the formations that are being investigated.

It has now been found that such undesired reflections originate from irregularities in and on the bottom of the body of water above the area that is being investigated, such as sand banks, differences in nature or composition of the near-surface layers of the bottom, and/or from obstacles such as wrecks on or in the bottom, and buoys floating on the water surface.

The object of the invention is to solve the problems of undesired reflections.

The means according to the invention is characterized by at least three groups of elongate floats, each group comprising at least two floats and the said floats of each group being interconnected by flexible cables, the leading float of a group including a rudder and wherein the flexible towing cables are, in use, above the water surface for at least 80% of their length.

The invention also relates to a method of operating the above means, wherein the groups of floats pass over separate paths parallel to the predetermined path, the sources are periodically activated to form acoustic wave fronts, and acoustic waves are detected by the hydrophones after reflection or refraction of the waves by subsurface layers of the area being investigated.

The method according to the present invention is as set out in claim 4. In this way the invention provides a "super-wide" array.

It is observed that best results, however, will be obtained if the cables are fully above the water surface, although they may be submerged locally from time to time by wave crests.

In carrying out the present method, the seismic arrays will travel at sufficient lateral distances from the path followed by the towing vessel and the hydrophones (that are generally assembled to a so-called streamer) that the acoustic waves reflected from obstacles or irregularities on or in the sea bottom (or in the water) will be cancelled as will be explained hereinafter.

It will be appreciated that each array of seismic sources carried by a float may consist of a single seismic source.

The minimum amount of groups of elongate floats is three, whereas the maximum amount is limited by the conditions that are to be met at sea. Generally good results will be obtained when using between four and eight groups of floats.

From US patents 3,331,050 and 3,921,124 a method is known to use a detection streamer and one or more marine seismic sources which are moved along an underwater path in order to obtain seismic data.

However, the method according to US patent 3,921,124 only uses the movement of seismic sources along a periodic path, each source unit being caused to describe essentially a sinusoidal pattern in the horizontal plane. Further no groups of seismic sources, each group consisting of at least two sources, have been mentioned. US patent 3,331,050 does not provide the "super-wide" array of the invention, but describes only the use of paravanes in three "planes". These "planes" are arranged with the paravanes of one plane substantially directly below the paravanes of the plane above.

From French patent 1,543,674 a marine seismic method is known, using a float, which has been connected to the towing vessel by means of a cable, the said cable being substantially over the water surface.

However, the said French patent does not describe the possibility of a "super-wide" array.

The invention will now be described by way of example in more detail with reference to the drawing, wherein:

Figure 1 shows schematically a top view of a means according to the invention;

Figure 2 shows schematically a side view of the means of Figure 1 taken in the direction of arrow II;

Figure 3 shows schematically a top view of a leading float for use in the means according to the invention;

Figure 4 shows schematically a side view of the float of Figure 3 taken in the direction of arrow IV;

Figure 5 shows schematically a side view of the float of Figure 4 taken in the direction of arrow V in Figure 4;

Figure 6 shows schematically a steering mechanism for controlling the position of a rudder of a leading float;

Figure 7 shows schematically a steering mechanism for controlling the position of a connecting means for a flexible cable attached to a leading float;

Figure 8 shows schematically a top view of still another embodiment of the invention.

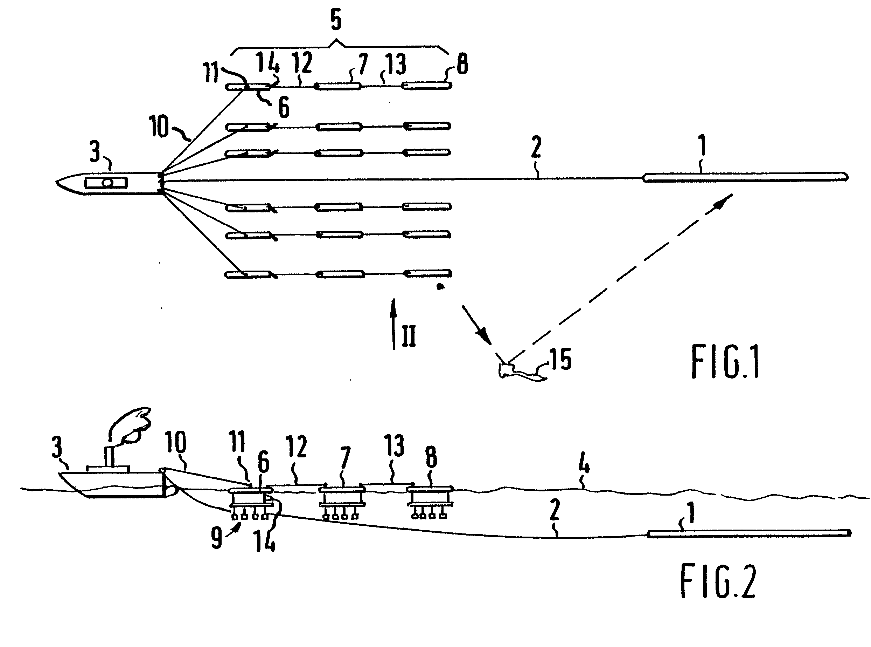

A streamer 1 (see Figures 1 and 2) carrying a plurality of hydrophones (not shown) is towed by means of a flexible cable 2 by a towing vessel 3. The cable 2 comprises the required electrical leads (not shown) for transmission of electric signals that are emitted by the hydrophones when perceiving acoustic waves. The streamer on being towed through the water 4 over a marine area to be investigated obtains a configuration such that the hydrophones carried thereby are arranged on a substantially straight line.

The streamer 1 may be provided with equipment known per se, such as electronic signal amplifiers, control equipment for controlling the towing depth, and means for controlling the course of the streamer.

The towing vessel 3 further tows six groups 5 of elongate floats 6, 7 and 8, each float carrying an array 9 of seismic sources. In the example shown in Figures 1 and 2 of the drawings, each seismic source consists of an air gun known per se.

Float 6 of each group of floats is a leading float connected by means of a flexible cable 10 (such as a steel cable, a nylon rope or suitable flexible means adapted to transfer a tensional load) to the towing vessel 3. Each cable 10 is attached to the float 6 co-operating therewith at a connecting means 11 mounted on the float. Further, flexible cables 12 and 13 interconnect each pair of floats 6, 7, and each pair of floats 7, 8, respectively, of each group 5, in such a manner that each of the floats 7 and 8 follows the leading float 6 of the relevant group when this float 6 is towed through the water by the vessel 3.

The cables 10, 12 and 13 have high-pressure conduits incorporated therein for supplying high-pressure fluid to the air guns. Further, the cables include electrical leads for the transmission of signals.

Apart from the connecting means 11, each leading float is provided with a rudder 14 that can be set in a position such that on towing the float 6 through the water by means of the cable 10, this float will follow a path that is parallel to the path followed by the towing vessel 3.

The position of the rudder 14 of a float 6 (that is the angle at which the plane of the rudder 14 is set with respect to the float body), and the position of the connecting means 11 of the float 6, as well as the speed of the towing vessel 3 are adjusted such that each towing cable 10 interconnecting the vessel 3 and a float 6 is substantially above the surface of the water 4.

Since the cables 10 are above the water, no drag forces are exerted thereon by the water, as a result whereof the two outer groups 5 of the groups of floats will be positioned at a considerable lateral distance (say between 10 and 250 metres) from the path followed by the vessel 3. The other groups 5 that are situated between the outer groups of floats are arranged at equal distances from each other, and as a result of the relatively wide spacing between the groups 5, acoustic waves of the wave fronts generated by the seismic arrays carried by the groups of floats will cancel each other in horizontal or substantially horizontal planes, whereby reflections of waves hitting an obstacle 15 that is present on or in the bottom of the water 4 will have a small amplitude. The influence of such reflections (that may also result from sand banks, buoys, etc.) on the seismic record made of the reflections resulting from subsurface layers of the marine area being investigated will be considerably decreased. The seismic record is obtained in a manner known per se by means of the hydrophones in the streamer 1 and further suitable equipment such as electric amplifiers, filters and recorders (not shown since known per se) and the electric leads of the flexible cable 2.

Elongate floats of any design suitable for the purpose may be used in the application of the invention. The floats 7 and 8 may be of a design equal to the design of the leading floats 6 apart from the rudder 14 and the adjustable connecting means 11. However, the floats 7 and 8 may be provided with rudders or fins for trimming purposes.

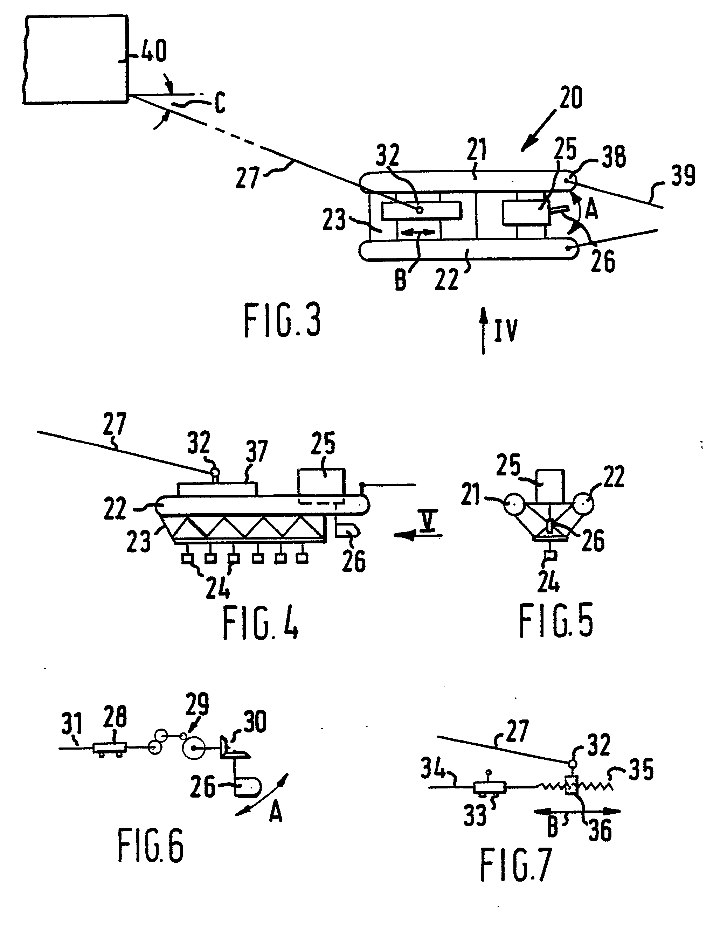

A suitable design of a leading float 20 is shown in Figures 3, 4 and 5 of the drawing. The float is of the catamaran type, and consists of two elongate buoyancy cylinders 21 and 22 made of a suitable material (such as metal or synthetic material) that are interconnected by a frame 23, the lower part of the frame being adapted for supporting a plurality of seismic sources 24 forming a seismic array.

A housing 25 is positioned on top of the frame 23 between the cylinders 21 and 22. A steering mechanism of known design is housed in the housing 25, the mechanism being operatively connected with a rudder 26. The steering mechanism can be operated to adjust the position of the rudder 26 at a desired angle and either keep the rudder in this position, or readjust it (see arrows A) by command signals to another angle. These command signals are transmitted from the towing vessel to the housing 25 either via electric leads in the cable 27 connecting the float 20 to a towing vessel (not shown) or in the form of radio waves.

Figure 6 schematically shows by way of example a steering mechanism for adjusting the position of the rudder 26, the mechanism consisting of an electric motor 28, and gear wheels 29, for activating the shaft 30 to which the rudder 26 is connected. The signals to activate the motor 28 are supplied via an electric cable 31.

The towing cable 27 (see Figures 3 and 4) is attached to connecting means 32 on the frame 23 of the float 20, which connecting means 32 are adjustable for steering purposes, such that the location thereof can be displaced over a certain distance along the longittudinal axis of the float 20. In the example shown, the connecting means 32 is arranged to be displaceable (see arrows B) in a direction parallel to the longitudinal axis of the float 20. The invention, however, is not limited hereto. If desired, the track along which the means 32 is displaceable may have any desired configuration suitable for the purpose.

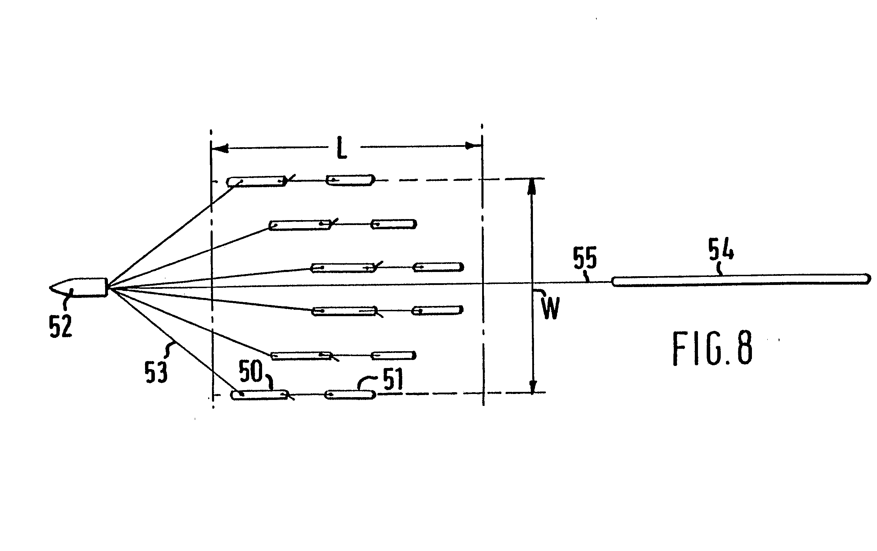

Figure 7 schematically shows by way of example a steering mechanism for the adjustment of the connecting means 32 along a straight track. The electromotor 33, which is controlled by command signals that are supplied thereto via the electric cable 34, activates a rotatable screw element 35 cooperating with a nut 36 that is secured against rotation. The nut 36 carries the connecting means 32 and by activating the motor 33, the position of the connecting means 32 can be adjusted over a pre-determined distance parallel to the longitudinal axis of the float. The steering mechanism for adjusting the connecting means 32 is enclosed in a housing 37 mounted on the frame 23 of the float.

The float 20 shown in Figures 3—5 further comprises eyes or hooks 38 for connecting cables 39 thereto, which cables are attached to a float (not shown) following the leading float in a particular group.

It will be appreciated that when towing the float 20 of Figures 3—5 through the water by means of the towing cable 27, the angle C (see Figure 3) between the cable and the longitudinal axis of the vessel 40 should be adjusted to a desired value in order to adjust the lateral distance between the path of this float and the path followed by the towing vessel and the streamer towed thereby. Adjusting the position of the rudder 26 and/or the position of the connecting means 32 allows the operator to obtain the desired angle C at a speed of the towing vessel that is suitable for carrying out the required seismic operations. The speed of the vessel should be sufficient to keep the cable 27 sufficiently taut to prevent it from being submerged in the water during the seismic operations, since this would exercise a drag on the cable 27. As a result thereof, the value of the angle C of each cable would be reduced to an undesired small degree, at which all the leading floats of the various groups of floats would come too close to each other, thereby increasing the acoustic energy emanated in horizontal directions by the seismic arrays. As a result thereof, the amplitude of the reflections of acoustic waves that have hit obstacles or obstructions in the body of water on or in the bottom of said body of water would increase and interfere to an undesirable degree with the reflections originating from the subsurface layers of the area being investigated.

It will be appreciated that apart from the adjustable rudder, each leading float may be provided with one or more fixed rudders or fins used for trimming purposes in horizontal and/or vertical directions of the float when in operation.

Finally, Figure 8 shows a configuration of floats consisting of six rows consisting each of two floats 50, 51, the rows being arranged in a V-form and being towed by means of a towing vessel 52 via flexible cables 53. The vessel 52 further tows a streamer 54 by means of a flexible cable 55.

It will be appreciated that many other configurations of the floats carrying the seismic arrays may be used, provided that the floats follow paths that are located at some distance parallel to the path followed by the towing vessel. The boundary of an area covered by a plurality of floats that are towed through the water in a manner according to the invention is shown in Figure 8. The width W of the area may be between 20 and 400 metres, whereas the length L is at least equal to the length of a single float. When applying rows of floats consisting of more than one float per row, the length L will be larger, say up to 400 metres.

The length of the streamer is generally between 75 and 1000 metres and the distance between the leading end of the streamer and the foremost leading float of the float configuration is generally between 0 and 500 metres.

The length of the cables towing the leading floats should be chosen as short as possible to prevent extreme sagging of the cables. It will be appreciated that the length thereof will have to be increased at increasing values of the width W of the float configuration to prevent excessive tension in the cables towing the outer leading floats of the float configuration.

It will be appreciated that the application of the invention is not restricted to the number of groups of floats used, provided that this number is at least three, and the amount of groups is not so large that the system becomes inoperable. The same applies for the amount of floats used in each group.

Further, the amounts of floats used in the various groups may be different from each other. The configuration of the floats may be symmetric or asymmetric with respect to the path to be followed by the towing vessel.

Any amount and configuration of seismic sources that is suitable for the purpose may be applied. The same applies for the type of seismic source used.

If desired, the width W of the configuration of arrays may be increased by applying more than one vessel towing a plurality of groups of floats. The vessels should then be operated such that the floats towed thereby form a single array configuration.

More than one streamer may be used for receiving the wave reflections returning from the area being investigated. The streamers may be towed in side-relationship, or one behind the other, or in any other configuration suitable for the purpose.

The flexible cables that are used for pulling the float and the streamer through the water may be connected to the towing vessel in any manner suitable for the purpose, such as by means of rotatable cable drums. Fluid conduits and/or electric conduits are incorporated therein for supplying the required energy to the seismic source. Further, electric leads may be incorporated therein for the transmission of signals between the vessel and the groups of floats.

It will be appreciated that the position of the groups of elongate floats may be controlled manually by a supervisor who adjusts — by remote control — the position of the various rudders and/or the position of the connecting means of the leading floats and/or the lengths of the flexible towing cables in such a manner that the groups of floats pass along the desired tracks. In an alternative manner, however, the position of the floats may be controlled automatically by continuously monitoring of the float positions and continuously adjusting the position of the rudders and/or the position of the connecting means and/or the lengths of the towing cables of the leading floats. Such automatic control may be performed by a three part system comprising:

a) a monitor system identifying and computing the location of each of the (leading) floats with respect to the towing vessel. Such system may, for example, include a radar transmitter-detector on board of the towing vessel and radar reflectors on the (leading) floats whereby distances and bearings of the groups of floats can be continuously (or periodically) measured. In an alternative arrangement, such a system may include underwater high frequency sound transmission means for obtaining the required data on distances and bearings of the groups of floats.

b) a comparator system whereby the bearing and distance for each (leading) float is pre-determined for a desired array configuration. These data are placed in an electronic or other memory in order to be compared during the seismic operation with the actual bearings and distances that are measured by the monitor system.

c) a guidance system for supplying signals to the operating means of the rudders and/or of the connecting means of the leading floats and/or of the drums on which the towing cables are wound, and/or of the means for controlling the speed and/or the course of the towing vessel to introduce corrections to return the leading floats to the desired position and course.

If desired, the system may be programmed to enable automatic turning and/or manoeuvring of the towing vessel without tangling up the groups of floats and/or the streamer.

The performance of the individual sources carried by the floats may be monitored and recorded. If one or more of the sources has or have not been performing correctly in operational use, compensational measures may later on be taken during the processing of the recorded signals to correct the results of such malfunctioning, these measures being based on the data gathered during operation of the seismic means.

**Claims**

1. A means for marine seismic exploration comprising a towing vessel (3; 52), a plurality of hydrophones (1; 54) attached to the towing vessel (3; 52) by means of a flexible cable (2; 55) and elongate floats (6, 7, 8; 50, 51), each float carrying an array of seismic sources (9; 24), at least three floats being attached to the towing vessel by means of a flexible towing cable (10; 27; 53) extending between the vessel and a connecting means (11; 32) on the float characterized by at least three groups of elongate floats, each group comprising at least two floats (6, 7, 8; 50, 51) and the said floats of each group being interconnected by flexible cables (12, 13), the leading float (6; 50; 20) of a group including a rudder (26) and wherein the flexible towing cables (10; 27; 53) are, in use, above the water surface for at least 80% of their length.

2. The means as claimed in claim 1, characterized in that the leading float (6; 50; 20) of each group of floats comprises a steering mechanism co-operating with the said connecting means (11; 32) on the leading float in order to control the position of this means with respect to the float.

3. The means as claimed in any one of the claims 1—2, characterized in that said means for marine seismic exploration comprises between four and eight groups of elongate floats (6, 7, 8; 50, 51).

4. A method of operating the means as claimed in any one of the claims 1—3, wherein

the groups of floats pass over separate paths parallel to a predetermined path, the sources are periodically activated to form acoustic wave fronts, and acoustic waves are detected by the hydrophones after reflection or refraction of the waves by subsurface layers of the area being investigated, characterized in that the position of each rudder (26), the position of each connecting means (11; 32) and the speed of the vessel passing along the predetermined path over a marine area to be investigated are adjusted such that the flexible cables (10; 27; 53) towing the leading floats are above the water surface for at least 80% of their length and wherein the position of the connecting means (11; 32) of at least one of the leading floats is operated during the towing procedure to vary the lateral distance between at least two of the parallel paths.

5. The method as claimed in claim 4, characterized in that the position of the floats is controlled by a three part system comprising a monitor system, a comparator system and a guidance system.

**Revendications**

1. Un moyen d'exploration sismique marine comprenant un navire de remorquage (3; 52), une multiplicité d'hydrophones (1; 54) attachés au navire de remorquage (3; 52) au moyen d'un câble flexible (2; 55) et de flotteurs allongés (6, 7, 8; 50, 51), chaque flotteur portant une rangée de sources sismiques (9; 24), au moins trois flotteurs étant attachés au navire de remorquage au moyen d'un câble flexible de remorquage (10; 27; 53) s'étendant entre le navire et un moyen de jonction (11; 32) sur le flotteur, caractérisé par au moins trois groupes de flotteurs allongés, chaque groupe comprenant au moins deux flotteurs (6, 7, 8; 50, 51) et les flotteurs de chaque groupe étant reliés entre eux par des câbles flexibles (12, 13), le flotteur de tête (6; 50; 20) d'un groupe comprenant un gouvernail (26) et les câbles flexibles de remorquage (10; 27; 53) étant, en service, au-dessus de la surface de l'eau sur au moins 80 % de leur longueur.

2. Un moyen selon la revendication 1, caractérisé en ce que le flotteur de tête (6; 50; 20) de chaque groupe de flotteurs comprend un mécanisme de direction coopérant avec le moyen de jonction (11; 32) sur le flotteur de tête pour régler la position de ce moyen par rapport au flotteur.

3. Un moyen selon l'une quelconque des revendications 1—2, caractérisé en ce que le moyen d'exploration sismique marine comprend entre quatre et huit groupes de flotteurs allongés (6, 7, 8; 50, 51).

4. Un procédé pour mettre en oeuvre le moyen selon l'une quelconque des revendications 1 à 3, dans lequel on fait passer les groupes de flotteurs sur des trajets parallèles à un trajet prédéterminé, les sources sont activées périodiquement pour former des fronts d'ondes acoustiques et les ondes acoustiques sont détectées par les hydrophones après réflexion ou réfraction des ondes par des couches souterraines de la zone explorée, caractérisé en ce que la position de chaque gouvernail (26), la position de chaque moyen de jonction (11; 32) et la vitesse du navire passant le long du trajet prédéterminé sur une zone marine à explorer sont réglées de manière que les câbles flexibles (10; 27; 53) remorquant les flotteurs de tête soient au-dessus de la surface de l'eau sur au moins 80 % de leur longueur et on agit sur la position de moyen de jonction (11; 32) d'au moins un des flotteurs de tête durant l'opération de remorquage de façon à faire varier la distance latérale entre au moins deux des trejets parallèles.

5. Un procédé selon la revendication 4, caractérisé en ce la position des flotteurs est réglée par un système en trois parties comprenant un système de contrôle, un système comparateur et un système de guidage.

**Patentansprüche**

1. Vorrichtung für eine seismographische Meereserforschung mit einem Schleppschiff (3; 52), einer Vielzahl von mit dem Schleppschiff mittels biegsamer Kabel (2; 55) verbundenen Hydrophonen (1; 54), mit langgestreckten Schwimmkörpern (6, 7, 8; 50, 51), deren jeder eine Reine seismischer Quellen (9; 24) trägt, wobei wenigstens drei Schwimmkörper mit dem Schleppschiff durch ein biegsames Schleppkabel (10; 27; 53) verbunden sind, das sich zwischen dem Schleppschiff und einer Verbindungseinrichtung (11; 32) auf dem Schwimmkörper erstreckt, gekennzeichnet durch wenigstens drei Gruppen langgestreckter Schwimmkörper, wobei jede Gruppe wenigstens zwei Schwimmkörper (6, 7, 8; 50, 51) aufweist und besagte Schwimmkörper-jeder Gruppe untereinander durch biegsame Kabel (12, 13) verbunden sind, un dadurch, dass der Leitschwimmkörper (6; 50; 20) einer Gruppe ein Steuerruder (26) aufweist und die biegsamen Schleppkabel (10; 27; 53) bei ihrem Gebrauch sich wenigstens zu 80% ihrer Länge oberhalb der Wasseroberfläche befinden.

2. Vorrichtung nach Anspruch 1, dadurch gekennzeichnet, dass der Leitschwimmkörper (6; 50; 20) jeder Gruppe von Schwimmkörpern einen Steuermechanismus aufweist, der mit den Verbindungseinrichtungen (11; 32) auf dem Leitschwimmkörper zusammenarbeitet, um die Position dieser Einrichtung bezüglich des Schwimmkörpers zu steuern.

3. Vorrichtung nach einem der Ansprüche 1 oder 2, dadurch gekennzeichnet, dass die Vorrichtung für die seismographische Meereserforschung zwischen vier und acht Gruppen langgestreckter Schwimmkörper (6, 7, 8; 50, 51) aufweist.

4. Verfahren zum Betreiben der Vorrichtung nach einem der Ansprüche 1 bis 3, bei dem die Gruppen der Schwimmkörper über separate Bahnen parallel zu einer vorbestimmten Bahn gleiten, die Quellen periodisch zur Bildung einer akustischen Wellenfront aktiviert werden und akustische Wellen mittels der Hydrophone nach Reflexion oder Brechung der Wellen durch unterhalb der Oberfläche liegende Schichten des zu untersuchenden Gebiets detektiert werden, dadurch gekennzeichnet, dass die Position jedes Steuerruders (26), die Position jeder Verbindungseinrichtung (11; 32) und die Geschwindigkeit des Schleppschiffs, das entlang der vorbestimmten Bahn über ein zu untersuchendes Seegebiet gleitet, so eingestellt werden, dass die biegsamen Kabel (10; 27; 53), die die Leitschwimmkörper schleppen, zu mindestens 80 % ihrer Länge oberhalb der Wasseroberflächen gehalten werden und dass die Position der Verbindungseinrichtung (11; 32) von mindestens einem der Leitschwimmkörper während des Schleppvorgangs betätigt wird, um den Abstand zwischen mindestens zweier der parallelen Bahnen zu variieren.

5. Verfahren nach Anspruch 4, dadurch gekennzeichnet, dass die Position der Schwimmkörper durch ein dreiteiliges System, bestehend aus einem Monitorsystem, einem Vergleichssystem und einem Leitsystem, gesteuert wird.

FIG.1

FIG.2

FIG.3

FIG.4

FIG.5

FIG.6

FIG.7

FIG.8